# EUROPÄISCHE PATENTSCHRIFT

(11) **EP 3 256 337 B1**
(45) Veröffentlichungstag und Bekanntmachung des Hinweises auf die Patenterteilung: **25.11.2020**
(21) Anmeldenummer: 16767286.4
(22) Anmeldetag: 20.09.2016
(51) Int. Cl.: B60H 1/00

(54) **AUFDACHKLIMAANLAGE**
ROOFTOP-MOUNTED AIR-CONDITIONING INSTALLATION
ÉQUIPEMENT DE CLIMATISATION DE TOIT

(30) Priorität: 30.10.2015 DE 102015118557
(43) Veröffentlichungstag der Anmeldung: 20.12.2017
(73) Patentinhaber: EBM-Papst Mulfingen GmbH&CO. KG, 74673 Mulfingen (DE)
(72) Erfinder: RATHGEB, Josef, 73489 Jagstzell (DE); HAAF, Oliver, 74635 Kupferzell (DE)
(74) Vertreter: Staeger & Sperling Partnerschaftsgesellschaft mbB
(86) Internationale Anmeldenummer: PCT/EP2016/072269
(87) Internationale Veröffentlichungsnummer: WO 2017/071880

(56) Entgegenhaltungen:
- CN-U- 205 344 430
- DE-U1-202015 105 776
- JP-A- S60 199 717
- JP-U- S5 114 908
- US-A- 4 641 502
- US-A- 6 134 909
- Unknown Unknown: "Radialventilatoren und -gebläse Die Wahl der Ingenieure", , 23. Oktober 2007 (2007-10-23), XP055335711, Gefunden im Internet: URL:http://www.ebmpapst.com/media/content/ info-center/downloads_10/catalogs/centrifu gal_fans_1/Radialventilatoren_2007_DE.pdf [gefunden am 2017-01-16]

## Beschreibung

Die Erfindung betrifft eine Aufdachklimaanlage, insbesondere für ein Omnibusdach.

Grundsätzlich sind Aufdachklimaanlagen für Omnibusse seit langem bekannt. Sie weisen zumeist eine Kondensatoreinheit sowie eine oder mehrere Verdampfereinheiten auf und stehen mit dem Fahrgastraum des Omnibusses strömungstechnisch in Verbindung, um diesen mit Frischluft zu versorgen. Die zugeführte Luft kann dabei über die Aufdachklimaanlage erwärmt oder gekühlt werden.

Gattungsbildender druckschriftlicher Stand der Technik ist beispielsweise veröffentlicht als DE 10 2007 023 249 A1, DE 60 2004 006 988 T2 oder EP 1 667 862 B1. Weiterer Stand der Technik im vorliegenden technischen Gebiet ist in den Druckschriften JP S51 14908 U, US 4 641 502 A, US 6 134 909 A, JP S60 199717 A und "Radialventilatoren und -gebläse Die Wahl der Ingenieure", XP055335711, offenbart.

Bei den eingesetzten Verdampfereinheiten werden herkömmlicherweise mehrere Doppel-Radialventilatoren mit vorwärtsgekrümmten Ventilatorrädern in einem Vollspiralgehäuse eingesetzt, die in einem Luftströmungskanal eine Luftströmung durch den Wärmetauscher in den Fahrgastraum fördern. Die Luftströmung wird dabei mehrfach umgelenkt, insbesondere beim Ansaugen, im Radialventilator selbst, beim Ausblasen und bei der Weiterführung. Dies wirkt sich negativ auf die Effizienz der Klimaanlage aus. Gleichzeitig steigt die Stromaufnahme der die Radialventilatoren antreibenden Elektromotoren und mithin der Kraftstoffverbrauch des Fahrzeugs.

Der Erfindung liegt deshalb die Aufgabe zugrunde, eine Aufdachklimaanlage bereit zu stellen, deren Effizienz, insbesondere in der Verdampfereinheit gesteigert ist. Zudem soll eine verringerte Stromaufnahme gewährleistet werden.

Diese Aufgabe wird durch die Merkmalskombination gemäß Patentanspruch 1 gelöst.

Erfindungsgemäß wird eine Aufdachklimaanlage insbesondere für ein Omnibusdach vorgeschlagen, die zumindest eine Kondensatoreinheit und eine oder mehrere Verdampfereinheiten aufweist. Die mindestens eine Verdampfereinheit weist einen Luftströmungskanal mit einer Luftansaugöffnung und einer Luftausblasöffnung auf, wobei in dem Luftströmungskanal zwischen der Luftansaugöffnung und der Luftausblasöffnung ein Wärmetauscher und ein eine Luftströmung erzeugender Radialventilator angeordnet sind. Dabei ist eine Drehachse des Ventilatorrades des Radialventilators parallel zu einer Luftströmungs-Hauptrichtung ausgerichtet, die sich durch den Luftströmungskanal von der Luftansaugöffnung durch den Wärmetauscher zu dem Radialventilator erstreckt.

Durch die erfindungsgemäße Ausrichtung des Radialventilators kann die Luft durch das Ventilatorrad axial gerade angesaugt und ohne Umlenkverluste radial in Richtung des Fahrgastraumes ausgeblasen werden. Die einzige Umlenkung erfolgt im Radialventilator. Die Effizienz der Aufdachklimaanlage wird somit durch eine Erhöhung der Effizienz ihrer Verdampfereinheit(en) gesteigert.

Dabei ist in einer vorteilhaften Ausführungsvariante vorgesehen, dass der Radialventilator oder das Ventilatorrad eine axiale Einlaufdüse zur Ansaugung der Luft in axialer Richtung parallel zur Luftströmungs-Hauptrichtung aufweist. Durch die Düse wird die Strömungsluft im Ansaugbereich zusätzlich beschleunigt und der Wirkungsgrad des Radialventilators erhöht.

Ferner ist bei der Aufdachklimaanlage in einer günstigen Ausführung vorgesehen, dass der Radialventilator angrenzend an die Luftausblasöffnung des Luftströmungskanals angeordnet ist, so dass eine von dem Radialventilator erzeugte Luftströmung unmittelbar in und durch die Luftausblasöffnung förderbar ist. Die Luftausblasöffnung bildet häufig den Lufteintritt in das angeschlossene Fahrzeug. Dabei kann im Dachbereich des Fahrzeugs ein Luftkanal zur Verteilung der zugeführten Luft in bestimmte Zuströmbereiche des Fahrgastinnenraums vorgesehen werden, in den der Radialventilator über die Luftausblasöffnung unmittelbar einbläst.

Bei dieser Ausführung ist der Wärmetauscher in Strömungsrichtung gesehen vor dem Radialventilator in dem Luftströmungskanal angeordnet, so dass die von dem Radialventilator geförderte Luft durch den Wärmetauscher gesaugt wird.

Ebenfallsvorteilhaft wirkt sich auf die Effizienz der Aufdachklimaanlage aus, wenn der Außendurchmesser des Radialventilators und mithin des Ventilatorrades besonders groß dimensioniert sind. In einer günstigen Ausführung entspricht der maximale Außendurchmesser des Radialventilators 80-120%, insbesondere 90-110% einer vertikalen Höhe des Luftströmungskanals. Dabei kann der Radialventilator in vertikaler Richtung über dem Luftströmungskanal hervorstehen. Zudem ist eine Ausführung vorteilhaft, bei der der maximale Außendurchmesser des Ventilatorrades des Radialventilators 80-95% der vertikalen Höhe des Luftströmungskanals entspricht.

In einem Ausführungsbeispiel ist die Aufdachklimaanlage dadurch gekennzeichnet, dass die Drehachse des Ventilatorrades mittig zu der vertikalen Höhe des Luftströmungskanals verläuft. Die angesaugte Strömung ist dann besonders homogen und auf beiden vertikal gegenüberliegenden Innenwänden des Luftströmungskanals gleich.

Der Radialventilator ist erfindungsgemäß in einem Halbspiralgehäuse aufgenommen, das zumindest eine offene Seite aufweist, die an die Luftausblasöffnung angrenzt. Aus dem Stand der Technik ist der Einsatz von Vollspiralgehäusen bekannt, bei denen das Ventilatorrad in Umfangsrichtung fast vollständig von dem Gehäuse umschlossen und nur eine sich tangential zum Ventilatorrad erstreckende Ausblasöffnung vorgesehen ist. Das Halbspiralgehäuse weist hingegen eine vollständig offene Seite auf, so dass das Ventilatorrad an der offenen Seite frei liegt, d.h. nicht von einem Gehäuse bedeckt wird.

Erfindungsgemäß ist ferner vorgesehen, dass das Halbspiralgehäuse ausblasseitig eine Ausblaskontur mit einem Luftleitabschnitt aufweist, der gegenüber einer vertikalen Ausblasrichtung senkrecht zur Luftströmungs-Hauptrichtung eine negative Neigung aufweist. Die negative Neigung liegt im Mittel bei einem Winkel bis -45°. Die negative Neigung ist derart ausgerichtet, dass der Luftleitabschnitt die von dem Radialventilator ausgeblasene Luft in den sich anschließenden Luftkanal in eine Richtung leitet, die zur Verteilung der Luft in bestimmte Zuströmbereiche des Fahrgastinnenraums vorteilhaft ist. Dadurch kann die herkömmlicherweise vertikal ausgeblasene Strömung bereits an dem Halbspiralgehäuse eine Führung in eine vorbestimmte Richtung erfahren, beispielsweise hin zu Zuströmöffnungen in den Fahrgastinnenraum. Hierdurch wird der Gegendruck im Ausblasbereich des Ventilatorrades verringert und die Effizienz des Radialventilators erhöht.

In einer Variante der Aufdachklimaanlage ist ferner vorgesehen, dass das Halbspiralgehäuse ausblasseitig in die Luftausblasöffnung hineinragt und gegenüber einem den Luftströmungskanal bildenden Kanalgehäuse vertikal nach außen hervorsteht. Dabei kann vor allem auch das Ventilatorrad mit seinem radialen Außenbereich in bzw. über die Luftausblasöffnung vorstehen und die radiale Luftströmung unmittelbar in einen Abschnitt des Fahrzeugs, beispielsweise den Luftkanal zur Verteilung der zugeführten Luft, einblasen. Zudem kann durch den Versatz des Radialventilators in vertikale Richtung sein Durchmesser und mithin seine Leistungsfähigkeit vergrößert werden. Auch kann ein Überstand des Radialventilators bzw. des Halbspiralgehäuses in vertikaler Richtung über den Luftströmungskanal vermieden werden. Die Aerodynamik der Aufdachklimaanlage ist dadurch verbessert.

Vorteilhaft bezüglich der reduzierten Teilezahl ist zudem eine Ausführung, bei der das Halbspiralgehäuse einteilig mit einem den Luftströmungskanal bildenden Kanalgehäuse ausgebildet ist.

Bei der erfindungsgemäßen Lösung ist ferner vorteilhaft, dass das Ventilatorrad rückwärtsgekrümmte Ventilatorschaufeln aufweist. Gegenüber herkömmlicherweise eingesetzten vorwärtsgekrümmten Ventilatorschaufeln ist der Wirkungsgrad rückwärtsgekrümmter Ventilatorschaufeln höher.

Erfindungsgemäß ist günstig, wenn die Kontur des Luftleitabschnitts an die Krümmung der rückwärtsgekrümmten Ventilatorschaufeln angepasst wird. Hierfür wird vorgesehen, dass der Luftleitabschnitt des Radialventilators in einer axialen Draufsicht eine Krümmung aufweist, die richtungsmäßig der Krümmung der

### Ventilatorschaufeln entspricht.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen beispielhaft schematisch:
- Fig. 1: eine Aufdachklimaanlage;
- Fig. 2: eine seitliche Schnittansicht einer Verdampfereinheit;
- Fig. 3: eine axiale Schnittansicht der Verdampfereinheit aus Fig. 2;
- Fig. 4: eine seitliche Schnittansicht einer Verdampfereinheit in einer alternativen Ausführung;
- Fig. 5: eine axiale Schnittansicht der Verdampfereinheit aus Fig. 4.

Gleiche Bezugszeichen benennen gleiche Teile in allen Ansichten.

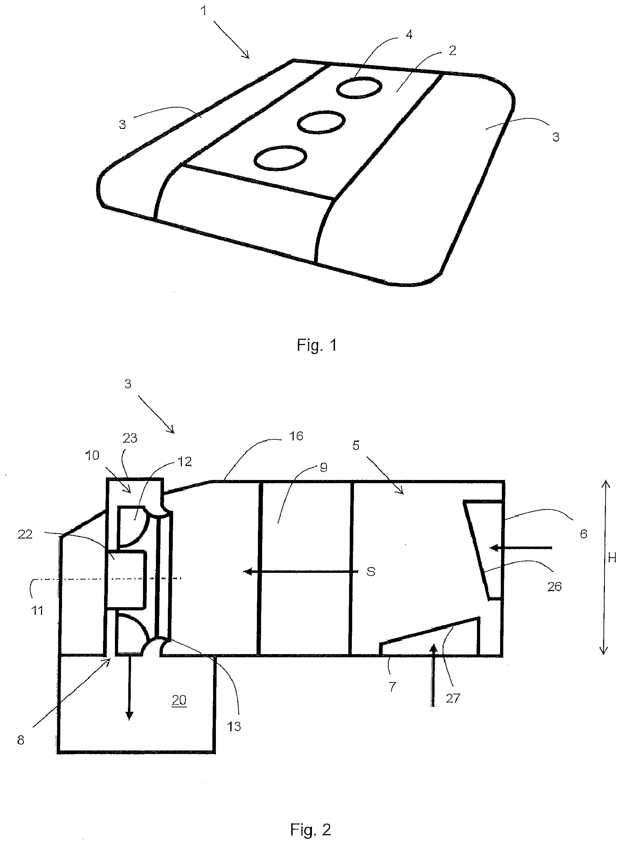

In Figur 1 ist beispielhaft schematisch eine Aufdachklimaanlage 1 zur Montage auf einem Omnibus dargestellt, die eine Kondensatoreinheit 2 mit drei Axiallüftern 4 und zwei seitlich zur Kondensatoreinheit 2 angeordnete Verdampfereinheiten 3 aufweist.

Figur 2 zeigt eine seitliche Schnittansicht einer der beiden Verdampfereinheiten 3 aus Figur 1, die über ihre Luftausblasöffnung 8 an einen Luftkanal 20 eines Omnibusses zur Verteilung der von der Aufdachklimaanlage 1 zugeführten Luft angeschlossen ist. Die Verdampfereinheit 3 umfasst den Luftströmungskanal 5, gebildet aus einem Kanalgehäuse 16, mit einer Luftansaugöffnung 6 für Frischluft und eine Luftansaugöffnung 7 für Umluft aus dem Fahrgastinnenraum des Omnibusses. Die Luftansaugöffnungen 6, 7 sind jeweils über Klappen 26, 27 verschließbar, so dass Frischlust und/oder Umluft förderbar ist. In dem Luftströmungskanal 5 ist zwischen den Luftansaugöffnungen 6, 7 und der Luftausblasöffnung 8 der Wärmetauscher 9 und der die Luftströmung erzeugende Radialventilator 10 angeordnet. Die Drehachse 11 des Ventilatorrades 12 des Radialventilators 10 ist parallel zur Luftströmungs-Hauptrichtung S des Luftstroms durch den Luftströmungskanal 5 ausgerichtet, die sich durch den Luftströmungskanal 5 von den Luftansaugöffnungen 6, 7 durch den Wärmetauscher 9 zu dem Radialventilator 10 erstreckt. Im Betrieb saugt der über den Motor 22 angetriebene Radialventilator 10 in axialer Richtung Frisch- und/oder Umluft durch den Wärmetauscher 9 und bläst diese in radialer Richtung über die Luftausblasöffnung 8 unmittelbar in den Luftkanal 20. Der Radialventilator 10 weist eine Einlaufdüse 13 auf und erstreckt sich in vertikaler Richtung über die vertikale Höhe des Luftströmungskanals 5 hinaus. Der Außendurchmesser des Ventilatorrades 12 entspricht 90% der lichten Weite in vertikaler Höhe H des Luftströmungskanals 5.

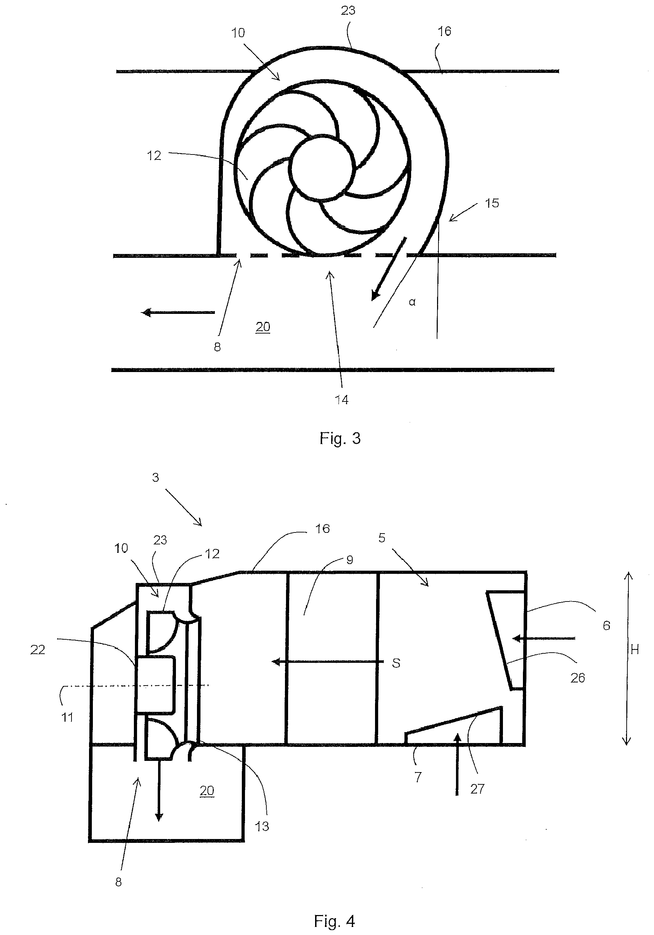

Wie in dem Axialschnitt gemäß Figur 3 gut zu erkennen, ist der Radialventilator 10 in einem eigenen Halbspiralgehäuse 23 aufgenommen, dessen untere, zur Luftausblasöffnung 8 weisende und daran angrenzende Seite 14 offen ist. Das Ventilatorrad 12 erstreckt sich bis an den Rand der Luftausblasöffnung 8 und weist rückwärtsgekrümmte Ventilatorschaufeln auf. Das Halbspiralgehäuse 23 steht in vertikaler Richtung über die Kanalwand 16 hervor. Ausblasseitig weist es einen Luftleitabschnitt 15 auf, der gegenüber der vertikalen Ausblasrichtung senkrecht zur Luftströmungs-Hauptrichtung S eine negative Neigung im Winkel α von in der gezeigten Ausführung ca. -30° aufweist. Der Luftleitabschnitt 15 bildet den Randabschnitt des Radialventilators 10. Er weist in der axialen Draufsicht gemäß Figur 3 eine Krümmung auf, die richtungsmäßig der Krümmung der Ventilatorschaufeln des Ventilatorrades 12 entspricht. Der Leitabschnitt 15 lenkt die Strömung in den Luftkanal 20 in eine vorbestimmte Richtung, so dass die Luft nicht vertikal, sondern bereits schräg teilweise in eine nachfolgend bestimmte Richtung strömt. Ein Pfeil zeigt die Strömungsrichtung des dargestellten Ausführungsbeispiels im Luftkanal 20 an. Das Ventilatorrad 12 und der Leitabschnitt 15 wirken dabei strömungstechnisch unmittelbar zusammen, so dass die Strömung zur Weiterführung in dem Luftkanal 20 bereits beim Luftaustritt aus dem Radialventilator 10 eine Führung in die nachfolgende gewünschte Richtung erfährt. In der gezeigten Ausführung nach links.

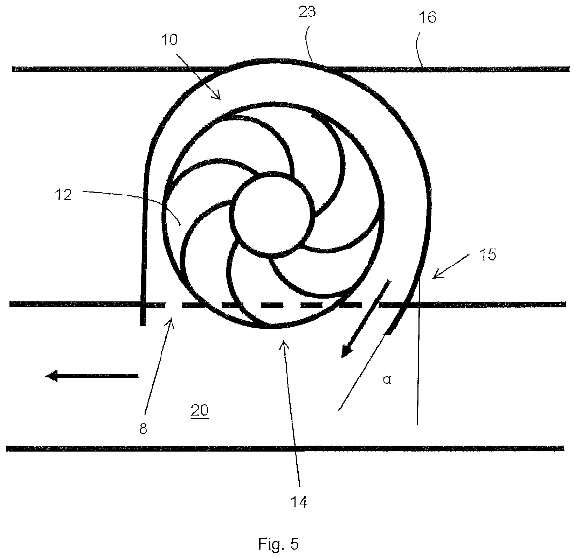

Die Figuren 4 und 5 zeigen ein alternatives Ausführungsbeispiel zu der Verdampfereinheit 3 aus den Figuren 2 und 3, wobei die Merkmale bis auf die Folgenden übereinstimmen. Der Radialventilator 10 ist in dem Halbspiralgehäuse 23 aufgenommen, das jedoch in vertikaler Richtung versetzt gegenüber dem den Strömungskanal 5 bildenden Kanalgehäuse 16 positioniert ist. Hierdurch steht das Halbspiralgehäuse 23 oberseitig in vertikaler Richtung weniger weit bzw. teilweise nicht über das Kanalgehäuse 16 vor. Unterseitig ragt es jedoch in den Luftkanal 20 hinein und steht über das Kanalgehäuse 16 hervor. Auch das Ventilatorrad 12 erstreckt sich mit seinem äußersten Radialabschnitt in die Luftausblasöffnung 8 hinein und rotiert mithin teilweise außerhalb des Kanalgehäuses 16 im Luftkanal 20. Der gesamte Aufbau ist kompakter.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise kann das Halbspiralgehäuse 23 in das Kanalgehäuse 16 einteilig integriert werden.

## Patentansprüche

1. Aufdachklimaanlage, insbesondere für ein Omnibusdach, zumindest mit einer Kondensatoreinheit (2) und einer Verdampfereinheit (3), die einen Luftströmungskanal (5) mit mindestens einer Luftansaugöffnung (6, 7) und einer Luftausblasöffnung (8) aufweist, wobei in dem Luftströmungskanal (5) zwischen der Luftansaugöffnung (6, 7) und der Luftausblasöffnung (8) ein Wärmetauscher (9) und ein eine Luftströmung erzeugender Radialventilator (10) angeordnet sind, und eine Drehachse (11) eines Ventilatorrades (12) des Radialventilators (10) parallel zu einer Luftströmungs-Hauptrichtung (S) ausgerichtet ist, die sich durch den Luftströmungskanal (5) von der mindestens einen Luftansaugöffnung (6, 7) durch den Wärmetauscher (9) zu dem Radialventilator (10) erstreckt, wobei der Radialventilator (10) in einem Halbspiralgehäuse (23) aufgenommen ist, wobei das Halbspiralgehäuse (23) zumindest eine offene Seite (14) aufweist, die an die Luftausblasöffnung (8) angrenzt, wobei das Halbspiralgehäuse (23) ausblasseitig eine Ausblaskontur mit einem Luftleitabschnitt (15) aufweist, der gegenüber einer vertikalen Ausblasrichtung senkrecht zur Luftströmungs-Hauptrichtung eine negative Neigung aufweist, **dadurch gekennzeichnet, dass** das Ventilatorrad (12) rückwärtsgekrümmte Ventilatorschaufeln aufweist und der Luftleitabschnitt (15) in einer axialen Draufsicht eine Krümmung aufweist, die richtungsmäßig der Krümmung der Ventilatorschaufeln des Ventilatorrades (12) entspricht.

2. Aufdachklimaanlage nach Anspruch 1, **dadurch gekennzeichnet, dass** der Radialventilator (10) oder das Ventilatorrad (12) eine axiale Einlaufdüse (13) zur Ansaugung von Luft in axialer Richtung parallel zur Luftströmungs-Hauptrichtung aufweist.

3. Aufdachklimaanlage nach Anspruch 1 oder 2, **dadurch gekennzeichnet, dass** der Radialventilator (10) angrenzend an die Luftausblasöffnung (8) des Luftströmungskanals (5) angeordnet ist, so dass eine von dem Radialventilator (10) erzeugte Luftströmung unmittelbar in die Luftausblasöffnung (8) förderbar ist.

4. Aufdachklimaanlage nach zumindest einem der vorigen Ansprüche, **dadurch gekennzeichnet, dass** der Wärmetauscher (9) in Strömungsrichtung gesehen vor dem Radialventilator (10) in dem Luftströmungskanal (5) angeordnet ist.

5. Aufdachklimaanlage nach zumindest einem der vorigen Ansprüche, **dadurch gekennzeichnet, dass** ein maximaler Außendurchmesser des Radialventilators (10) 80-120% einer vertikalen Höhe (H) des Luftströmungskanals (5) entspricht.

6. Aufdachklimaanlage nach zumindest einem der vorigen Ansprüche, **dadurch gekennzeichnet, dass** ein maximaler Außendurchmesser des Ventilatorrades (12) des Radialventilators (10) 80-95% einer vertikalen Höhe (H) des Luftströmungskanals (5) entspricht.

7. Aufdachklimaanlage nach zumindest einem der vorigen Ansprüche, **dadurch gekennzeichnet, dass** die Drehachse (11) des Ventilatorrades (12) mittig zu einer vertikalen Höhe (H) des Luftströmungskanals (5) verläuft.

8. Aufdachklimaanlage nach einem der vorigen Ansprüche 1 bis 7, **dadurch gekennzeichnet, dass** die negative Neigung im Mittel einen Winkel bis -45° aufweist.

9. Aufdachklimaanlage nach einem der vorigen Ansprüche 1 bis 8, **dadurch gekennzeichnet, dass** das Halbspiralgehäuse (23) ausblasseitig in die Luftausblasöffnung (8) hineinragt und gegenüber einem den Luftströmungskanal (5) bildenden Kanalgehäuse (16) hervorsteht.

10. Aufdachklimaanlage nach zumindest einem der vorigen Ansprüche 1 bis 9, **dadurch gekennzeichnet, dass** das Halbspiralgehäuse (13) einteilig mit einem den Luftströmungskanal (5) bildenden Kanalgehäuse (16) ausgebildet ist.

## Claims

1. Rooftop mounted air conditioning installation, in particular for a bus roof, at least having a condenser unit (2) and an evaporator unit (3), which has an air flow duct (5) having at least one air intake opening (6, 7) and one air discharge opening (8), wherein in the air flow duct (5) between the air intake opening (6, 7) and the air discharge opening (8) a heat exchanger (9) and a radial fan (10) generating an air flow are arranged, and a rotation axis (11) of a fan wheel (12) of the radial fan (10) is aligned parallel to an air flow main direction (S) extending through the air flow duct (5) from the at least one air intake opening (6, 7) through the heat exchanger (9) to the radial fan (10), wherein the radial fan (10) is accommodated in a semi-spiral housing (23), whereby the semi-spiral housing (23) has at least one open side (14) which adjoins the air discharge opening (8), the semi-spiral housing (23) having a discharge contour having an air guide section (15) on the discharge side, which has a negative inclination with respect to a vertical blow-off direction perpendicular to the air flow main direction, **characterized in that** the fan wheel (12) has backwardly curved fan blades and the air guide section (15) has a curvature in an axial plan view which corresponds in direction to the curvature of the fan blades of the fan wheel (12).

2. Rooftop mounted air conditioning installation according to claim 1, **characterized in that** the radial fan (10) or the fan wheel (12) has an axial inlet nozzle (13) for sucking in air in the axial direction parallel to the air flow main direction.

3. Rooftop mounted air conditioning installation according to claim 1 or 2, **characterized in that** the radial fan (10) is arranged adjacent to the air discharge opening (8) of the air flow duct (5) so that an air flow generated by the radial fan (10) can be conveyed directly into the air discharge opening (8).

4. Rooftop mounted air conditioning installation according to at least one of the previous requirements, **characterized in that** the heat exchanger (9) is arranged in the air flow duct (5) in front of the radial fan (10), seen in the flow direction.

5. Rooftop mounted air conditioning installation according to at least one of the preceding claims, **characterized in that** a maximum outer diameter of the radial fan (10) corresponds to 80-120% of a vertical height (H) of the air flow duct (5).

6. Rooftop mounted air conditioning installation according to at least one of the preceding requirements, **characterized in that** a maximum outer diameter of the fan wheel (12) of the radial fan (10) corresponds to 80-95% of a vertical height (H) of the air flow duct (5).

7. Rooftop mounted air conditioning installation according to at least one of the preceding claims, **characterized in that** the rotation axis (11) of the fan wheel (12) extends centrally to a vertical height (H) of the air flow duct (5).

8. Rooftop mounted air conditioning installation according to one of the preceding claims 1 to 7, **characterized in that** the negative inclination has an average angle up to -45°.

9. Rooftop mounted air conditioning installation according to one of the preceding claims 1 to 8, **characterized in that** the semi-spiral housing (23) projects on the discharge side into the air discharge opening (8) and protrudes from a channel housing (16) forming the air flow duct (5).

10. Rooftop mounted air conditioning installation according to at least one of the preceding claims 1 to 9, **characterized in that** the semi-spiral housing (13) is formed in one piece with a channel housing (16) forming the air flow duct (5).

## Revendications

1. Equipement de climatisation de toit, en particulier pour un toit d'autobus, au moins avec une unité de condensateur (2) et une unité d'évaporateur (3), qui présente un canal d'écoulement d'air (5) avec au moins une ouverture d'aspiration d'air (6, 7) et une ouverture de purge d'air (8), dans lequel sont agencés, dans le canal d'écoulement d'air (5) entre l'ouverture d'aspiration d'air (6, 7) et l'ouverture de purge d'air (8), un échangeur de chaleur (9) et un ventilateur radial (10) produisant un écoulement d'air, et un axe de rotation (11) d'une roue de ventilateur (12) du ventilateur radial (10) s'aligne parallèlement à une direction principale (S) de l'écoulement d'air, qui s'étend à travers le canal d'écoulement d'air (5) de la au moins une ouverture d'aspiration d'air (6, 7) au ventilateur radial (10) à travers l'échangeur de chaleur (9), dans lequel le ventilateur radial (10) est reçu dans un boîtier demi-spiralé (23), dans lequel le boîtier demi-spiralé (23) présente au moins un côté ouvert (14) qui est adjacent à l'ouverture de purge d'air (8), dans lequel le boîtier demi-spiralé (23) présente côté purge un contour de purge avec une section déflectrice d'air (15) qui présente vis-à-vis d'une direction de purge verticale perpendiculairement à la direction principale de l'écoulement d'air une inclinaison négative,
**caractérisé en ce que** :
la roue de ventilateur (12) présente des pales de ventilateur courbées vers l'arrière et la section déflectrice d'air (15) présente en élévation axiale une courbure qui correspond directionnellement à la courbure des pales de ventilateur de la roue de ventilateur (12).

2. Equipement de climatisation de toit selon la revendication 1, **caractérisé en ce que** le ventilateur radial (10) ou la roue de ventilateur (12) présente une tuyère d'entrée axiale (13) pour aspirer l'air dans la direction axiale parallèlement à la direction principale d'écoulement de l'air.

3. Equipement de climatisation de toit selon la revendication 1 ou 2, **caractérisé en ce que** le ventilateur radial (10) est agencé de manière adjacente à l'ouverture de purge d'air (8) du canal d'écoulement d'air (5) de sorte qu'un écoulement d'air produit par le ventilateur radial (10) puisse être acheminé directement dans l'ouverture de purge d'air (8).

4. Equipement de climatisation de toit selon au moins l'une quelconque des revendications précédentes, **caractérisé en ce que** l'échangeur de chaleur (9) est agencé, en observant dans le sens d'écoulement, devant le ventilateur radial (10) dans le canal d'écoulement d'air (5).

5. Equipement de climatisation de toit selon au moins l'une quelconque des revendications précédentes, **caractérisé en ce qu'**un diamètre externe maximal du ventilateur radial (10) correspond à 80-120 % d'une hauteur verticale (H) du canal d'écoulement d'air (5).

6. Equipement de climatisation de toit selon au moins l'une quelconque des revendications précédentes, **caractérisé en ce qu'**un diamètre externe maximal de la roue de ventilateur (12) du ventilateur radial (10) correspond à 80-95 % d'une hauteur verticale (H) du canal d'écoulement d'air (5).

7. Equipement de climatisation de toit selon au moins l'une quelconque des revendications précédentes, **caractérisé en ce que** l'axe de rotation (11) de la roue de ventilateur (12) s'étend au centre sur une hauteur verticale (H) du canal d'écoulement d'air (5).

8. Equipement de climatisation de toit selon l'une quelconque des revendications précédentes 1 à 7, **caractérisé en ce que** l'inclinaison négative au centre présente un angle allant jusqu'à -45°.

9. Equipement de climatisation de toit selon l'une quelconque des revendications précédentes 1 à 8, **caractérisé en ce que** le boîtier demi-spiralé (23) dépasse côté purge dans l'ouverture de purge d'air (8) et fait saillie vis-à-vis d'un boîtier de canal (16) formant le canal d'écoulement d'air (5).

10. Equipement de climatisation de toit selon au moins l'une quelconque des revendications précédentes 1 à 9, **caractérisé en ce que** le boîtier demi-spiralé (13) est conçu d'un seul bloc avec un boîtier de canal (16) formant le canal d'écoulement d'air (5).
